# EUROPEAN PATENT APPLICATION

(11) **EP 2 555 533 A2**
(43) Date of publication of application: **06.02.2013**
(21) Application number: 12177447.5
(22) Date of filing: 23.07.2012
(51) Int. Cl.: H04N 21/242, H04N 21/2187

(54) **High-bandwidth audio/video transmission processing system**

(30) Priority: 01.08.2011 TW 100127269
(71) Applicant: Hides Inc., Zhongli City 320 (TW)
(72) Inventor: Wu, Ching-Song, Beitou Dist. 112 Taipei City (TW); Lee, Hsing-Lang, Beitou Dist. 112 Taipei City (TW)
(74) Representative: Viering, Jentschura & Partner

(57) **Abstract**

A high-bandwidth audio/video transmission processing system includes a plurality of cameras, a plurality of audio/video process devices, a transmission line, server, audio/video presentation device and storage device. The encoder in an audio/video process device encodes and compresses an audio/video signal captured and received by cameras into an audio/video signal of H.264/MPEG/AAC, a multiplexer converts it to a signal of MPEG2 transport stream format, a modulator modulates it into a digital television baseband signal, and a up-converter converts it to a digital television RF signal by mixing a higher frequency and transmits it to the server through a transmission line, thereby using a coaxial cable deployed for an analogue camera originally, and allowing original analogue video transmission system to be upgraded to a digital HD audio/video transmission system. Furthermore, system time is stamped into the MPEG2 transport stream to be used as an electronic time stamp, thereby finding a video clip at a specific time automatically and conveniently.

## Description

### BACKGROUND OF THE INVENTION

### 1. Field of the Invention

The present invention relates to an audio/video transmission system, and more particularly to an audio/video transmission system capable of using existing coaxial cables, twisted pairs, twin lead wires and regular electric wires as a transmission medium for high definition video and audio.

### 2. Description of Related Art

In a traditional surveillance system, video is transmitted to a digital video recorder (DVR) for monitoring and recording through a dedicated coaxial cable after being captured by each analogue camera, where the signal transmitted on a coaxial cable is an NTSC or PAL CVBS(composite video baseband signal) video signal. The disadvantages of the traditional surveillance system is that the CVBS video signal cannot supportHD(highdefinition, e.g. 1920x1080x30P) cameras and a dedicated coaxial cable is required for each camera. The system deployment cost of a star topology coaxial cable network is very complex and expensive.

Taiwan Patent No. M400723 discloses a device transmitting an analogue video and network signal simultaneously; it includes at least one mixer for receiving a baseband analogue video signal and baseband network signal, where at least one first up-converter used for converting the baseband analogue video signal and a receiver electrically connected to the mixer through a coaxial cable, where the receiver includes a second frequency down converter used for recovering the analogue video signal coming from the mixer.

Taiwan Patent No. 1227635 discloses a video transmission device, used for carrying out an video packet transmission for video signals captured by an video capture device through an existing wire deployment (e.g. power line), and control the video capture device; it includes an video conversion unit, convert video signals into digital video data; a video compression unit, compressing the digital video data by means of a video compression technology; a packet process unit, packaging the compressed data into a video data packet; and a modem, packaging video data and transmitting it through an existing wire layout by means of RF modulation, and a further added control unit, used to control the other units; the data modulated by the modem has a frequency of 20MHz and a transmission throughput up to 14Mbps; the modem provides a data content of 16 bits and supports up to sixteen sets of IP addresses.

The Taiwan patent technologies mentioned above can utilize a single existing coaxial cable or power line to transmit video signals captured by multiple cameras, but cannot transmit high definition(HD) video data captured by multiple HD cameras simultaneously and therefore, cannot allow a surveillance system to have a function of monitoring the live videos of multiple HD cameras simultaneously.

### SUMMARY OF THE INVENTION

To further improve conventional audio/video transmission processing systems, the present invention is proposed.

The main object of the present invention is to provide a high-bandwidth audio/video transmission processing system, utilizing first an encoder in an audio/video process device to encode and compress an audio/video signal captured and received by cameras into an audio/video signal of H.264/MPEG/AAC, converting it into a signal of MPEG2 transport stream format through a multiplexer, modulating it into a digital television baseband signal through a modulator, converting it into a higher frequency digital television RF signal through a up-converter, and transmitting it to the backend servers through a transmission line; the present invention canuse a coaxial cable deployed for an analogue camera originally, thereby allowing an original analogue video transmission system to be upgraded to a digital HD audio/video transmission system.

Another object of the present invention is to provide a high-bandwidth audio/video transmission processing system, capable of mixing system time into a signal of MPEG2 transport stream format to use it as an electronic time stamp directly by means of DVB SI TDT/TOT standard format or ATSC PSIP STT standard format through a multiplexer, thereby finding a video clip at a specific time automatically and conveniently upon a future data search.

Still another object of the present invention is to provide a high-bandwidth audio/video transmission processing system, capable of transmitting digital and analogue video signals simultaneously, allowing the same coaxial cable to transmit one channel analogue CVBS (composite video baseband signal) video signal and multiple channel digital video signals simultaneously.

Still another object of the present invention is to provide a high-bandwidth audio/video transmission processing system, capable of transmitting digital TV and control signals simultaneously, allowing the same coaxial cable to transmit one serial control signal RS-485/RS-232/RS-422 in baseband and multiple channel digital video signals in RF band at the same time.

### BRIEF DESCRIPTION OF THE DRAWINGS

The present invention can be more fully understood by reference to the following description and accompanying drawings, in which:
FIG. 1 is a block diagram of a functional structure of a high-bandwidth audio/video transmission system according to the present invention;
FIG. 2 is a block diagram of a functional structure of an audio/video process device according to the present invention; and
FIG. 3 is a block diagram of a functional structure of a receiver according to the present invention.

### DETAILED DESCRIPTION OF THE PREFERRED EMBODIMENTS

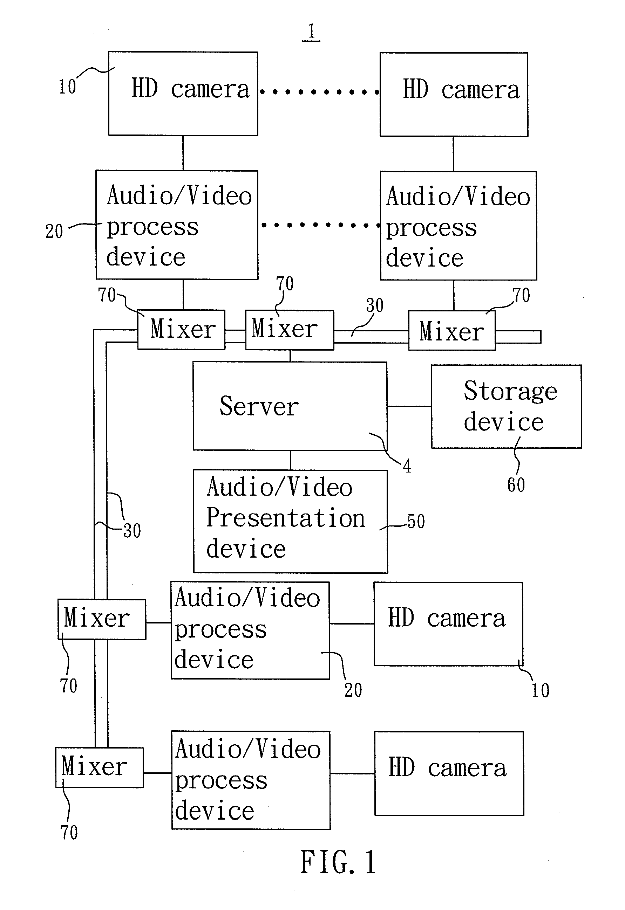

Referring to FIG. 1, a high-bandwidth audio/video transmission processing system 1 of the present invention includes a plurality of cameras 10, a plurality of audio/video process device 20, at least one transmission line 30, at least one server 4, at least one audio/video presentation device 50, at least one storage device 60 and a plurality of mixers 70. Each camera 10 is electrically connected to one audio/video process device 20. The plurality of audio/video process devices 20 and the at least one server 4 are respectively electrically connected to the transmission line 40 through the mixer 70, where audio/video signals output from the plurality of audio/video device 20 are transmitted to the server 4 through the transmission line 30. Furthermore, the server 4 is electrically connected to the at least one audio/video presentation device 50 and/or the at least one storage device 60. The audio/video presentation device 50 includes a display capable of showing videos and a speaker capable of playing sounds, and the transmission line 30 may be a general coaxial cable, twisted pairs, twin lead wire or regular electric wires. In addition, the mixer 70 may also be called as an RF splitter.

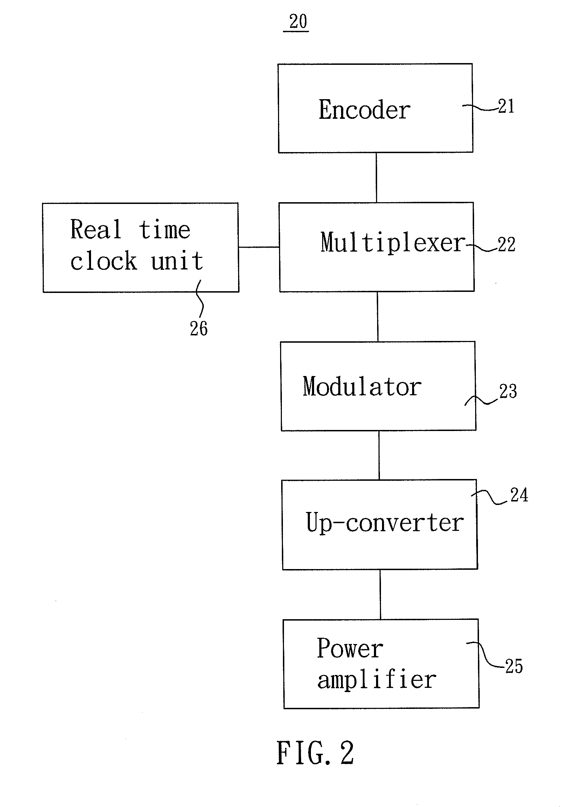

Referring to FIG. 2, the audio/video process device 20 of the present invention includes an encoder 21, multiplexer 22, modulator 23, up-converter 24 and power amplifier 25, and a real time clock(RTC) unit 26 electrically connected to each other in sequence.

The encoder 21 of the present invention is an encoder of H.264/MPEG/ACC, used for encoding and compressing an audio/video signal to an encoded audio/video signal of H.264/MPEG/ACC. The multiplexer 22 is used for multiplexing the H.264/MPEG/ACC audio/video stream into an MPEG2 transport stream format, and stamping system time provided by the real time clock unit 26 into the MPEG2 transport stream in DVB SI TDT/TOT standard format or ATSC PSIP STT standard format. The modulator 23 is used for modulating the signal of MPEG2 audio/video transport stream format into a digital television baseband signal. The up-converter 24 includes a local oscillator(LO), converting the digital television baseband signal to a digital television RF signals with a higher frequency specified by the local oscillator. The power amplifier 25 is used for amplifying the digital television RF signal properly, thereby allowing the digital television RF signal to be transmitted in a long distance. The frequency of the local oscillator may be adjusted in the range of 50MHz and 1000MHz, allowing each audio/video process device 20 to be transmitted in a different RF frequency, the plurality of digital television RF signals with a different frequency can be transmitted in the same transmission line so that the plurality of cameras 10 are allowed to share the same transmission line 30.

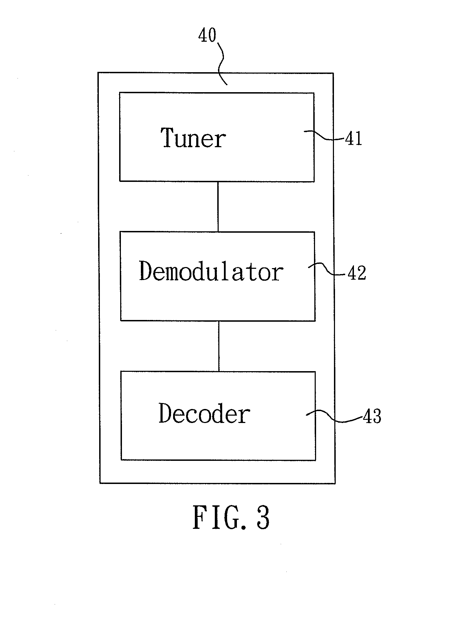

Referring to FIGS. 1 and 3, the server 4 of the present invention includes at least one receiver 40; each receiver 40 includes a tuner 41, demodulator 42 and decoder 43 electrically connected to each other in sequence.

The tuner 41 of the present invention is used for receiving the digital television signal with a specific RF frequency, and converting it to a digital television baseband signal. The demodulator 42 is used for demodulating the digital television baseband signal to an MPEG2 transport stream with H.264/MPEG/AAC audio/video. The decoder 43 is used for decoding the H.264/MPEG/AAC audio/video stream so that the audio/video can be shown or played by the presentation device 50.

Referring to FIGS. 1. 2 and 3 again, the high definition audio/video signal constituted by a video signal captured and the audio signal received by the camera 10 of the present invention is received by the audio/video process device 20, the encoder 21, thereafter, encodes and compresses the audio/video signal into the audio/video signal of H.264/MPEG/AAC, the multiplexer 22 then converts it into a MPEG2 transport stream format and stamp the system time provided by the real time clock unit 26 into the MPEG2 transport stream format according to DVB SI TDT/TOT standard format or ATSC PSIP STT standard format, the modulator 23 next modulates it into the digital television baseband signal, the up-converter 24 further converts it into the digital television RF signal with a higher frequency, and the power amplifier 25 finally amplifies the digital television RF signal properly, thereby allowing the digital television RF signals to be transmitted on the transmission line 30 in a long distance.

The tuner 41 of each receiver 40 of the server 4 can receive the digital television signal with a specific RF frequency transmitted on the transmission line 30, and convert it to the digital television baseband signal, the demodulator 42 demodulates it to an MPEG transport stream with H.264/MPEG/AAC audio/video signal, and the decoder 43 decodes it to the audio/video signal so that can be shown or played by the audio/video presentation device 50 or stored in the storage device 60.

The modulator 23 of the present invention is to modulate the signal of a MPEG2 transport stream format to the baseband signal by means of digital television modulation, wherein the digital television modulation standard may be chosen from any one in a group constituted by DVB-C/DVB-C2, DVB-T/DVB-H/DVB-T2, ATSC, ISDB-T, DMB-T/H(DTMB), QAM(ITU J.83 Annex A/B/C) and the like.

The transport stream of the present invention bases on a MPEG2 transport stream(TS) specification defined by ISO_IEC_13818-1; A transport streams is composed by fixed-length packets, 188 bytes per packet. Not only audio/video packets but SI/PSI/PSIP packets are included in the MPEG2 transport stream. SI(Service information)/PSI(Program Specific Information) /PSIP (Program and System Information Protocol) is used to describe the content of the MPEG2 transport stream, and provide some additional information.

PSI is defined by ISO_IEC_13818-1, and SI is regulated by DVB EN 300468. In an SI table, the TOT (Time offset table)/TDT(Time Date table) is used to describe local time information. The PSIP is regulated by ATSC A/65, An SST (system time table) is used to describe system time in the PSIP.

Another characteristic of the present invention is that system time is mixed in the signal of a MPEG2 transport stream format according to the DVB SI TDT/TOT standard format or ATSC PSIP STT standard format. The electronic time stamp can be used directly to find a video clip at a specific time slot automatically and conveniently upon a future video data search and retrieval.

The present invention decides the number of transmissible channels on one transmission line according to a selected modulation bandwidth. Taking 6MHz as an example, 158 cameras can be equipped with simultaneously in theory if the local oscillator of the up converter can be adjusted in a range between 50MHz and 1000MHz.

The present invention may use a coaxial cable deployed originally for the use of an analogue camera; it is easy to achieve the object of allowing an original analogue video transmission system to be upgraded to a digital HD audio/video transmission system.

Another merit that the present invention utilizes digital television modulation is that the technology thereof is mature, companion peripheral devices may be acquired easily and cheaply. In addition, it is relatively easy on installation, trouble shooting and maintenance. Comparing with analogue television modulation, digital television modulation signal can be transmitted farer on the same transmission line such that the usable transmission medium is more flexible.

In addition, the present invention can transmit more data while the same bandwidth is used. Taking DVB-T modulation as an example, one channel with a bandwidth 6MHz can transmit 23.75Mbps the most, namely, can transmit two-channel 10Mbps digital programs.

The present invention uses MPEG2 transport stream format to carry H.264/MPEG/AAC audio/video signals. One inheritance feature of the present invention is that multiple H.264/MPEG/AAC audio/video streams can be multiplexed in a physical digital TV RF channel.

In addition, because the occupied band is different from the original CVBS (composite video baseband signal) video signal (less than 8MHz) after the frequency up conversion of the local oscillator of the up-converter according to the present invention, one channel CVBS signal can be transmitted on the same coaxial cable, namely, the present invention can transmit digital and analogue video signals simultaneously, allowing the same coaxial cable can transmit one channel analogue CVBS (composite video baseband signal) video signals and multiple channel digital audio/video signals, thereby improving the conventional transmission system substantially.

Alternatively, the baseband can be used to transmit RS-485/RS-232/RS-422 serial control signal, instead of CVBS signal. The backend server can control the front end camera device with RS-485/RS-232/RS-422, called return channel control. Since RS-485/RS-232/RS-422 signal runs on the baseband, it can be multiplexed on the same cable with RF signal. Thus, no extra RS-485/RS-232/RS-422 cable is required for return channel control.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A high-bandwidth audio/video transmission processing system (1), comprising:
a plurality of audio/video process device (20), each audio/video process device (20) comprising an encoder (21), a multiplexer (22), a modulator (23) and an up-converter (24) electrically connected to each other in sequence; and
at least one transmission line (30), electrically connected to said respective audio/video process device (20);
Wherein, when said audio/video process device (20) receives an audio/video signal, said encoder (21) encodes and compresses said audio/video signal into a coded audio/video signal, said multiplexer (22) converts said coded audio/video signal into a signal of an audio/video transport stream format, said modulator (23) modulates said signal of an audio/video transport stream format into a digital television baseband signal, saidup-converter (24) converts said digital television baseband signal into a digital television signal with a higher RF frequency, and said digital television RF signal is transmitted through said at least one transmission line (30).

2. The high-bandwidth audio/video transmission processing system (1) according to claim 1, wherein said coded audio/video signal is a H.264/MPEG/AAC audio/video signal; said signal of a audio/video transport stream format is a signal of a MPEG2 transport stream format.

3. The high-bandwidth audio/video transmission processing system (1) according to claim 2, wherein said up-converter (24) comprises a local oscillator, converting a digital television signal to radio frequency (RF) by mixing a frequency of said local oscillator, allowing said plurality of digital television RF signals with a different frequency to be transmitted on the same transmission line (30).

4. The high-bandwidth audio/video transmission processing system (1) according to claim 3, wherein system time is stamped in said signals of a MPEG2 transport stream format to be used as an electronic time stamp to find a video clip at a specific time slot automatically and convenientlyupon a future data search.

5. The high-bandwidth audio/video transmission processing system (1) according to claim 4, wherein said audio/video process device (20) comprises a power amplifier (25); said up-converter (24) is electrically connected to said power amplifier (25); said power amplifier (25) amplifies said digital television RF signal, thereby benefiting long-distance transmission of said digital television RF signal.

6. The high-bandwidth audio/video transmission processing system (1) according to claim 5, wherein said transmission line (30) transmits one channel analogue composite video baseband signal(CVBS) or RS-485/RS-232/RS-422 signal at the same time.

7. The high-bandwidth audio/video transmission processing system (1) according to claim 6, wherein at least one channel H.264/MPEG/AAC audio/video signal is carried in said signal of a MPEG2 transport stream format.

8. The high-bandwidth audio/video transmission processing system (1) according to any one of claims 1 to 7, wherein said transmission line (30) is electrically connected to at least one server (4); said server (4) comprises at least one receiver (40) ; said receiver (40) comprises a tuner (41), a demodulator (42) and a decoder (43) electrically connected to each other in sequence; said tuner (41) receives a digital television RF signal with a specific frequency; said demodulator (42) demodulates said digital television RF signal into an audio/video transport stream signal; said decoder (43) decodes said audio/video transport stream signal to an audio/video signal.

9. The high-bandwidth audio/video transmission processing system (1) according to claim 8, wherein said server (4) is electrically connected to at least one audio/video presentation device (50) or at least one storage device (60), or at least one audio/video presentation device (50) and at least one storage device (60).

10. The high-bandwidth audio/video transmission processing system (1) according to claim 9, further comprising a plurality of mixer (70) ; said server (4) and said audio/video process device (20) are respectively electrically connected to said transmission line (30) through said respective mixer (70) ; said transmission line (30) is a coaxial cable, twisted pairs, twin lead wires or regular electric wires.
